# EUROPÄISCHE PATENTANMELDUNG

(11) **EP 3 490 105 A1**
(43) Veröffentlichungstag der Anmeldung: **29.05.2019**
(21) Anmeldenummer: 17203599.0
(22) Anmeldetag: 24.11.2017
(51) Int. Cl.: H02K 1/18, H02K 1/16

(54) **STATOR FÜR EINE ELEKTRISCHE ROTIERENDE MASCHINE**

(71) Anmelder: Siemens Aktiengesellschaft, 80333 München (DE)
(72) Erfinder: Balzer, Christoph, 12163 Berlin (DE); Jadzinski, Sascha, 14532 Stahnsdorf (DE); Krakow, Frank, 15738 Zeuthen (DE); Meyer, Christian, 13591 Berlin (DE); Schulz, Sabrina, 16515 Oranienburg OT Sachsenhausen (DE)

(57) **Zusammenfassung**

Die Erfindung betrifft einen Stator (14) für eine elektrische rotierende Maschine (4), aufweisend ein Statorblechpaket (22) mit einer Vielzahl von geschichteten Elektroblechen (28). Um bei einer hohen Steifigkeit eine geringe radiale Bauhöhe zu erreichen, wird vorgeschlagen, dass das Statorblechpaket (22) zumindest abschnittsweise von einem metallischen Versteifungselement (30) umgeben ist, wobei das Versteifungselement (30) flächig auf dem Statorblechpaket (22) aufliegt und Ausnehmungen (42) aufweist, wobei das Versteifungselement (30) im Bereich zumindest einiger Ausnehmungen (42) mit zumindest einem Teil der Elektrobleche (28) des Statorblechpakets (22) verbunden ist.

## Beschreibung

Die Erfindung betrifft einen Stator für eine elektrische rotierende Maschine aufweisend ein Statorblechpaket mit einer Vielzahl von geschichteten Elektroblechen.

Ferner betrifft die Erfindung eine elektrische rotierende Maschine mit mindestens einem derartigen Stator.

Die Erfindung betrifft darüber hinaus einen Gondelantrieb mit mindestens einer derartigen elektrischen rotierenden Maschine.

Weiterhin betrifft die Erfindung ein Wasserfahrzeug, insbesondere ein Schiff, mit mindestens einem derartigen Gondelantrieb.

Überdies betrifft die Erfindung ein Verfahren zur Herstellung eines Stators.

Ein derartiger Stator wird beispielsweise in einer elektrischen rotierenden Maschine in einem Gondelantrieb, auch Propulsionsantrieb und kurz POD-Antrieb genannt, auf einem Schiff eingesetzt. Die elektrische rotierende Maschine, welche insbesondere als Motor und/oder Generator ausgeführt ist, ist beispielsweise mit einer Leistung von mindestens einem Megawatt betreibbar. Der Gondelantrieb ist außerhalb eines Schiffsrumpfs angeordnet, während des Betriebes von Meerwasser umgeben und dadurch einer Strömung ausgesetzt. Durch die Strömung ergeben sich erhöhte Anforderungen an eine Baugröße der elektrischen rotierenden Maschine, insbesondere an den Maschinendurchmesser, sowie an eine Steifigkeit des Stators der elektrischen rotierenden Maschine.

Die Offenlegungsschrift EP 3 145 055 A1 beschreibt ein Statorblechpaket einer elektrischen Maschine, welche insbesondere in einem POD-Antrieb eines Schiffes einsetzbar ist. Das Statorblechpaket umfasst Druckplatten, wobei eine Vielzahl von Riegel die zumindest zwei Druckplatten miteinander verbinden und wobei die Druckplatten insbesondere endseitige Druckplatten sind. Die Riegel sind zumindest teilweise in den Nuten von Elektroblechen. Die Riegel werden mit den Druckplatten verschweißt. Das Statorblechpaket eignet sich insbesondere für einen POD-Antrieb.

Die Offenlegungsschrift EP 2 670 025 A1 beschreibt ein kühlendes Stützelement für ein Statorsegment einer elektrischen Maschine, insbesondere eines Generators. Das kühlende Stützelement umfasst eine erste Platte mit einer oberen Oberfläche und einer unteren Oberfläche, sowie eine zweite Platte mit einer oberen Oberfläche und einer unteren Oberfläche. An der unteren Oberfläche der zweiten Platte sind T-förmige Stege angeordnet, um die Steifigkeit des kühlenden Stützelements zu erhöhen.

Der Erfindung liegt die Aufgabe zugrunde, einen Stator für eine elektrische rotierende Maschine anzugeben, der bei einer hohen Steifigkeit eine geringe radiale Bauhöhe aufweist.

Diese Aufgabe wird erfindungsgemäß durch einen Stator für eine elektrische rotierende Maschine gelöst, welcher ein Statorblechpaket mit einer Vielzahl von geschichteten Elektroblechen aufweist, wobei das Statorblechpaket zumindest abschnittsweise von einem metallischen Versteifungselement umgeben ist, wobei das Versteifungselement flächig auf dem Statorblechpaket aufliegt und Ausnehmungen aufweist, wobei das Versteifungselement im Bereich zumindest einiger Ausnehmungen mit zumindest einem Teil der Elektrobleche des Statorblechpakets verbunden ist.

Ferner wird die Aufgabe erfindungsgemäß durch eine elektrische rotierende Maschine mit mindestens einem derartigen Stator gelöst.

Darüber hinaus wird die Aufgabe erfindungsgemäß durch einen Gondelantrieb mit mindestens einer derartigen elektrischen rotierenden Maschine gelöst.

Desweiteren wird die Aufgabe erfindungsgemäß durch ein Wasserfahrzeug, insbesondere Schiff, mit mindestens einem derartigen Gondelantrieb gelöst.

Überdies wird die Aufgabe erfindungsgemäß durch ein Verfahren zur Herstellung eines derartigen Stators gelöst, wobei ein Statorblechpaket durch Schichten einer Vielzahl von Elektroblechen gebildet wird, wobei daraufhin ein metallisches Versteifungselement zumindest abschnittsweise auf dem Statorblechpaket aufliegend angeordnet und mit zumindest einem Teil der Elektrobleche verbunden wird.

Die in Bezug auf den Stator nachstehend angeführten Vorteile und bevorzugten Ausgestaltungen lassen sich sinngemäß auf die elektrische rotierende Maschine, den Gondelantrieb, das Wasserfahrzeug und das Herstellungsverfahren übertragen.

Der Erfindung liegt die Überlegung zugrunde, die radiale Bauhöhe eines Stators zu verringern, um beispielsweise ein Wasserfahrzeug mit einem Gondelantrieb auszustatten, welcher eine hohe Leistungsdichte und/oder eine strömungstechnisch günstige Form aufweist. Die radiale Bauhöhe des Stators wird, ohne an Steifigkeit zu verlieren, verringert indem die Elektrobleche des Statorblechpakets über ein flächiges metallisches Versteifungselement verbunden werden. Durch das flächig auf dem Statorblechpaket aufliegende Versteifungselement wird eine Verschiebung der Elektrobleche zueinander, beispielsweise unter Einwirkung eines Torsionsmoments, verhindert, sodass insbesondere eine hohe Torsionssteifigkeit des Statorblechpakets erreicht wird. Da das Versteifungselement vollständig oder zumindest teilweise um das Statorblechpaket angeordnet ist und flächig auf dem Statorblechpaket aufliegt, wird bei einer ausreichenden Steifigkeit eine sehr geringe radiale Bauhöhe des Stators erreicht. Ein weiterer Vorteil eines mit den Elektroblechen verbundenen Versteifungselements ist, dass auf Spannbolzen, welche durch das Statorblechpaket verlaufen und die Elektrobleche miteinander verspannen, zumindest teilweise verzichtet werden kann, was die radiale Bauhöhe des Stators zusätzlich reduziert.

In einer bevorzugten Ausgestaltung ist das Versteifungselement mit zumindest einem Teil der Elektrobleche des Statorblechpakets stoffschlüssig verbunden. Durch eine stoffschlüssige Verbindung ist das Versteifungselement unlösbar mit den Elektroblechen verbunden. Eine derartige unlösbare Verbindung ist zuverlässig und wartungsarm. Darüber hinaus wird durch eine stoffschlüssige Verbindung, beispielsweise durch einen Wegfall von Verbindungselementen, insbesondere radiale, Bauhöhe eingespart.

In einer weiteren vorteilhaften Ausführungsform ist die stoffschlüssige Verbindung durch Kleben, Löten und/oder Schweißen hergestellt. Derartige Verbindungen sind, selbst bei hohen mechanischen Belastungen, zuverlässig sowie leicht und günstig herzustellen.

Besonders vorteilhaft verläuft zumindest eine stoffschlüssige Verbindung in Umfangsrichtung. Durch den Verlauf in Umfangsrichtung vergrößert sich eine Kontaktfläche mit den jeweiligen Elektroblechen, sodass die mechanische Stabilität und die Torsionssteifigkeit erhöht werden.

In einer bevorzugten Ausgestaltung ist das Versteifungselement als, insbesondere periodisches, Gitter ausgeführt, welches zumindest teilweise in Umfangsrichtung verlaufend angeordnete Verzweigungen aufweist. Unter einem periodischen Gitter ist ein Gitter zu verstehen, welches ein Muster aufweist, das sich periodisch wiederholt. Ein Gitter sorgt für eine gleichmäßige Momentübertragung und ist sowohl leicht als auch kostengünstig herzustellen.

Bei einer weiteren vorteilhaften Ausführungsform sind die Verzweigungen des Gitters in Radialrichtung profiliert ausgeführt. Insbesondere durch eine, beispielsweise T-förmig oder H-förmig, verzweigte Profilierung in Radialrichtung wird eine zusätzliche Versteifung erreicht. Durch eine derartige Profilierung ist die radiale Bauhöhe weiter reduzierbar.

Vorteilhaft sind sich kreuzende Verzweigungen im Wesentlichen orthogonal zueinander angeordnet. Durch eine orthogonale Anordnung der Verzweigungen sind viele Verbindungen des Versteifungselements mit den Elektroblechen über eine große Länge herstellbar, sodass die mechanische Stabilität und die Torsionssteifigkeit optimiert werden. Darüber hinaus führt eine orthogonale Anordnung zu einem ausgewogenen Verhältnis zwischen Steifigkeit und Materialeinsatz.

In einer weiteren vorteilhaften Ausführungsform sind die Ausnehmungen im Wesentlichen polygonal, insbesondere tetragonal, ausgeführt. Mit Hilfe von polygonalen Ausnehmungen sind Gitters mit einem periodischen Muster einfach zu erstellen. Aufgrund der geraden Kanten sind polygonale Ausnehmungen leicht und kostengünstig herstellbar.

Vorteilhaft weist der Stator zumindest zwei Druckplatten auf, wobei das Versteifungselement mit zumindest einer Druckplatte stoffschlüssig verbunden ist. Die Druckplatten sind aus einem Werkstoff mit einer, im Vergleich zu den Elektroblechen, höheren Festigkeit hergestellt und/oder sind dicker als die Elektrobleche ausgeführt. Durch eine stoffschlüssige Verbindung des Versteifungselements mit den Druckplatten wird die Steifigkeit des Stators zusätzlich erhöht.

Bei einer weiteren vorteilhaften Ausführungsform bildet das Versteifungselement auf dem Statorblechpaket verteilte Felder aus. Über die Felder wird ein im Statorblechpaket entstehendes Moment an das Gehäuse weitergeleitet. Eine Geometrie der Felder, insbesondere eine Größe und/oder eine Dicke, sowie eine Verteilung der Felder auf dem Statorblechpaket sind, je nach Anforderungen der elektrischen rotierenden Maschine, flexibel anpassbar.

In einer bevorzugten Ausgestaltung sind innerhalb der Ausnehmungen, insbesondere radiale, Kühlkanäle angeordnet. Derartige Kühlkanäle ermöglichen eine im Wesentlichen ungehinderte Abfuhr eines Kühlfluids unter Gewährleistung einer hohen Steifigkeit und geringen radialen Bauhöhe des Stators.

Im Folgenden wird die Erfindung anhand der in den Figuren dargestellten Ausführungsbeispiele näher beschrieben und erläutert.

Es zeigen:
- FIG 1: einen Längsschnitt eines Gondelantriebs im Bereich einer elektrischen rotierenden Maschine,
- FIG 2: eine perspektivische Darstellung eines Stators mit einer ersten Ausführungsform eines Versteifungselements,
- FIG 3: einen vergrößerten Ausschnitt einer Oberfläche des Stators im Bereich des Versteifungselements in der ersten Ausführungsform,
- FIG 4: eine perspektivische Darstellung eines Stators mit einer zweiten Ausführungsform eines Versteifungselements,
- FIG 5: einen vergrößerten Ausschnitt einer Oberfläche des Stators im Bereich des Versteifungselements in der zweiten Ausführungsform,
- FIG 6: eine perspektivische Darstellung eines Stators mit einer dritten Ausführungsform eines Versteifungselements und
- FIG 7: ein Schiff mit einem Gondelantrieb.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

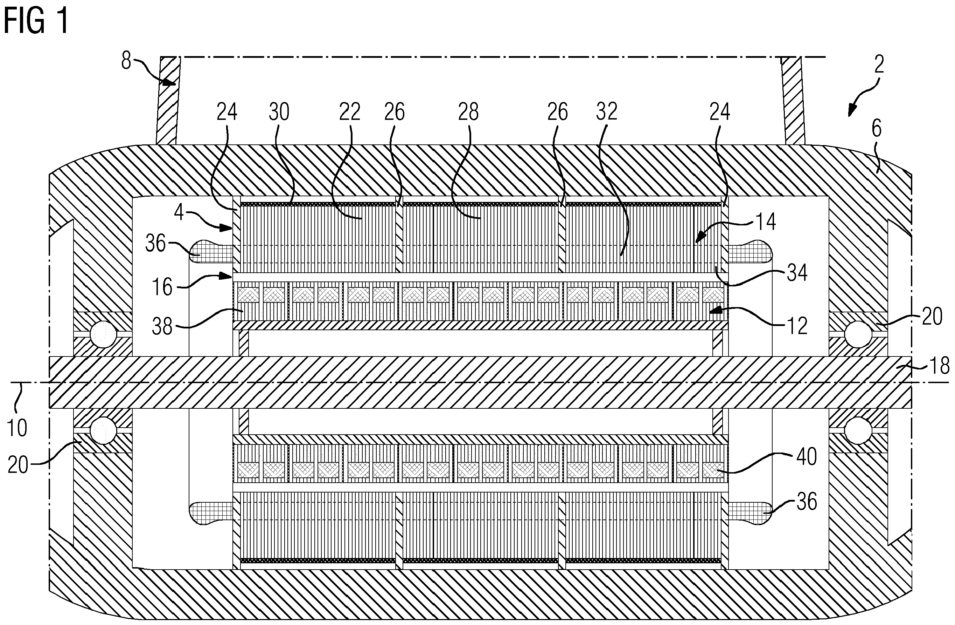

FIG 1 zeigt einen Längsschnitt eines Gondelantriebs 2 im Bereich einer elektrischen rotierenden Maschine 4, welche exemplarisch als permanenterregte Synchronmaschine ausgeführt ist. Der Gondelantrieb 2 ist beispielsweise für ein Wasserfahrzeug geeignet. Die elektrische rotierende Maschine 4 weist ein Gehäuse 6 auf, welches an einem Schaft 8 befestigt ist. Das Gehäuse 6 wird beispielsweise aus Stahl, Bronze oder einem anderen metallischen Werkstoff hergestellt. Über den Schaft 8 ist der Gondelantrieb 2 drehbar mit einem in FIG 1 aus Gründen der Übersichtlichkeit nicht dargestellten Schiffsrumpf verbunden. Die elektrische rotierende Maschine 4 umfasst ferner einen um eine Rotationsachse 10 rotierbaren Rotor 12 und einen den Rotor 12 umgebenden Stator 14. Zwischen dem Rotor 12 und dem Stator 14 befindet sich ein Spalt 16, der bevorzugt als Luftspalt ausgeführt ist. Die Rotationsachse 10 definiert eine Axialrichtung, eine Radialrichtung und eine Umfangsrichtung. Der Rotor 12 ist drehfest auf einer Welle 18 befestigt, welche an einer Antriebsseite AS und an einer Nicht-Antriebsseite BS jeweils ein Lager 20 aufweist.

Der Stator 14 der elektrischen rotierenden Maschine 4 weist ein Statorblechpaket 22 mit Druckplatten 24 und Zwischendruckplatten 26 auf, wobei zwischen den Druckplatten 24 und Zwischendruckplatten 26 eine Vielzahl von in Axialrichtung geschichteten Elektroblechen 28 angeordnet ist. Die Druckplatten 24, 26 weisen einen größeren Außendurchmesser auf als die Elektrobleche 28. Der Stator 14 ist über die Druckplatten 24 und Zwischendruckplatten 26 mittels einer Schrumpfverbindung mit dem Gehäuse 6 verbunden. An einer Außenfläche der geschichteten Elektrobleche 28 ist ein metallisches Versteifungselement 30 angeordnet, welches flächig auf dem Statorblechpaket 22 aufliegt und zwischen den Druckplatten 24, 26 angeordnet ist. Das metallische Versteifungselement 30, welches beispielsweise aus einem Stahl gefertigt wird, ist mit zumindest einem Teil der Elektrobleche 28 des Statorblechpakets 22 unlösbar verbunden. Eine derartige unlösbare Verbindung ist insbesondere stoffschlüssig und wird beispielsweise über eine Schweißverbindung hergestellt. Zusätzlich oder alternativ ist das Versteifungselement 30, beispielsweise über eine Schrumpfverbindung, kraftschlüssig mit zumindest einem Teil der Elektrobleche 28 des Statorblechpakets 22 verbunden. Optional ist das Versteifungselement 30 stoffschlüssig mit zumindest einer Druckplatte 24, 26 verbunden. Durch das Versteifungselement 30 wird eine verbesserte Steifigkeit, insbesondere Torsionssteifigkeit, bei einer gleichzeitigen Reduzierung der radialen Bauhöhe des Stators 14 erreicht.

Der Stator 14 umfasst darüber hinaus eine Statorwicklung 32, die in Nuten 34 des Statorblechpakets 22 angeordnet ist und an dessen axialen Enden Wickelköpfe 36 ausbildet.

Der Rotor 12 der exemplarisch als permanenterregte Synchronmaschine ausgeführten elektrischen rotierenden Maschine 4 umfasst, insbesondere in ein Rotorblechpaket 38 integrierte, Permanentmagnete 40.

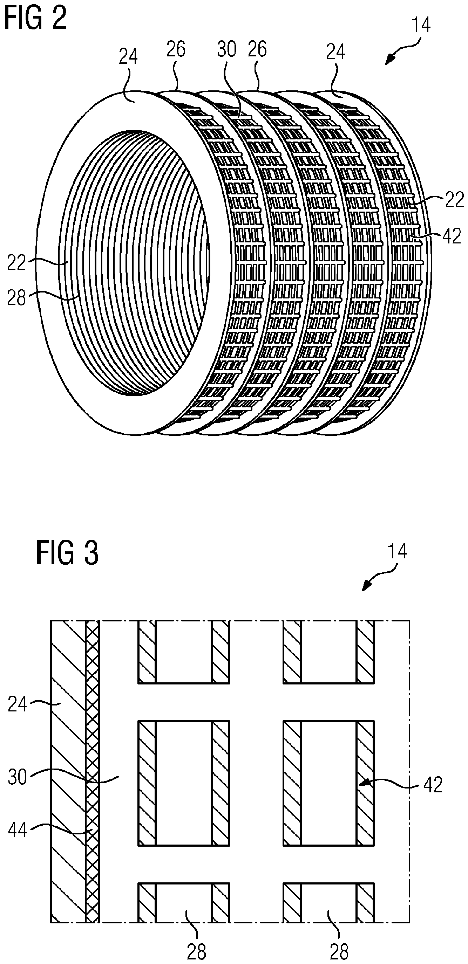

FIG 2 zeigt eine perspektivische Darstellung eines Stators 14 mit einer ersten Ausführungsform eines Versteifungselements 30. Die Nuten 34 mit der Statorwicklung 32 sind aus Gründen der Übersichtlichkeit nicht dargestellt. Das Versteifungselement 30 ist zylinderförmig ausgeführt und weist ein, insbesondere periodisches, Gitter auf, welches beispielsweise aus einem Blech hergestellt wird und Verzweigungen aufweist, die ein Muster bilden. Das Muster des Gitters des in FIG 2 gezeigten Versteifungselements 30 wiederholt sich periodisch, wobei das Gitter im Wesentlichen identische rechteckige Ausnehmungen 42 aufweist, welche in Umfangsrichtung und Axialrichtung parallel zueinander angeordnet sind. Die rechteckigen Ausnehmungen 42 werden beispielsweise in das Blech gestanzt, gefräst oder mit einem Laser herausgeschnitten. Im Querschnitt weisen die Verzweigungen des Gitters einen unter Berücksichtigung der Biegung des Versteifungselements 30 im Wesentlichen rechteckigen Querschnitt auf. Alternativ zu den rechteckigen Ausnehmungen 42 weist das den Stator 14 umgebende Blech, insbesondere gleich große periodisch angeordnete, runde oder ovale Ausnehmungen 42 auf. Alternativ wird ein Gitter aus einer Vielzahl von Metallbändern hergestellt, wobei die Abschnitte unlösbar miteinander verbunden werden. Derartige Metallbänder sind leicht und kostengünstig herzustellen. Alternativ zu einem rechteckigen Querschnitt sind die Verzweigungen des Gitters in Radialrichtung profiliert ausgeführt. Insbesondere durch eine T-förmige oder H-förmige Profilierung in Radialrichtung wird eine zusätzliche Versteifung erreicht. Die weitere Ausführung des Stators 14 in FIG 2 entspricht der Ausführung in FIG 1.

FIG 3 zeigt einen vergrößerten Ausschnitt einer Oberfläche des Stators 14 im Bereich des Versteifungselements 30 in der ersten Ausführungsform. Sich kreuzende Verzweigungen des Versteifungselements 30 sind orthogonal zueinander angeordnet, sodass im Wesentlichen identische rechteckige Ausnehmungen 42 ausgebildet sind. Alternativ sind die Ausnehmungen 42 unterschiedlich groß. Die Ausnehmungen 42 sind so angeordnet, dass sie ein zumindest radiales Ausströmen eines Kühlfluids durch einen im Statorblechpaket 22 angeordneten Kühlkanal ermöglichen. Zumindest eine Kante einer rechteckigen Ausnehmung 42 ist derartig parallel zu einem Elektroblech 28 angeordnet, dass eine in Umfangsrichtung verlaufende stoffschlüssige Verbindung zwischen dem Elektroblech 28 und dem Versteifungselement 30 herstellbar ist. Über eine Schweißverbindung 44 wird eine stoffschlüssige Verbindung zwischen der Druckplatte 24 und dem Versteifungselement 30 hergestellt. Die weitere Ausführung des Stators 14 in FIG 3 entspricht der Ausführung in FIG 2.

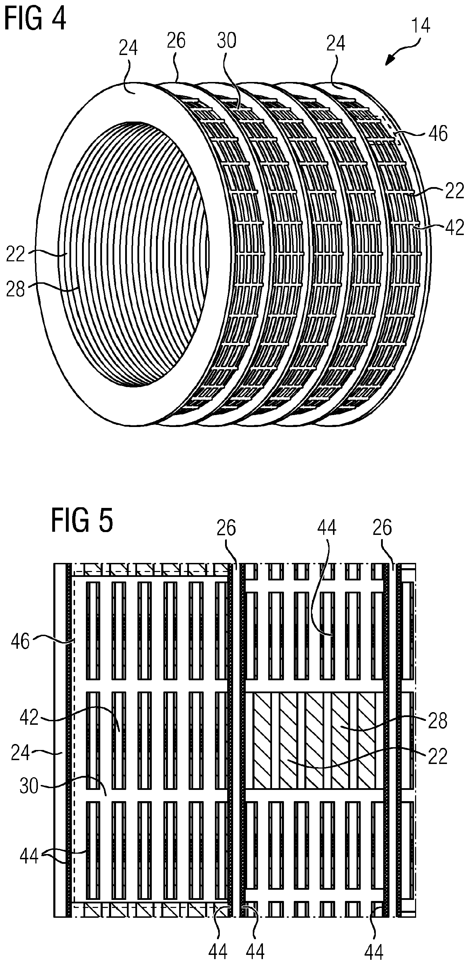

FIG 4 zeigt eine perspektivische Darstellung eines Stators 14 mit einer zweiten Ausführungsform eines Versteifungselements 30. Wie in FIG 2 sind die Nuten 34 mit der Statorwicklung 32 aus Gründen der Übersichtlichkeit nicht dargestellt. Das Versteifungselement 30 bildet auf dem Statorblechpaket 22 verteilte Felder 46, sogenannte Schalenelemente, aus, die zwischen zwei Druckplatten 24, 26 angeordnet sind. Die Felder 46 sind, insbesondere periodisch, über die Außenfläche des Statorblechpakets 22 verteilt, sodass ein im Statorblechpaket 22 entstehendes Moment über die Schalenelemente an die Druckplatten 24, 26 ins Gehäuse 6 weitergeleitet wird. Ferner sind die Felder 46, beispielsweise über eine Schweißverbindung, dauerhaft mit zumindest einem Teil der Elektrobleche 28 des Statorblechpakets 22 verbunden. Zusätzlich oder alternativ sind die Felder 46 formschlüssig mit dem Statorblechpaket 22 verbunden indem sie zumindest teilweise in das Statorblechpaket 22 hineinragen und eine formschlüssige Verbindung ausbilden. Die weitere Ausführung des Stators 14 in FIG 4 entspricht der Ausführung in FIG 3.

FIG 5 zeigt einen vergrößerten Ausschnitt einer Oberfläche des Stators 14 im Bereich des Versteifungselements 30 in der zweiten Ausführungsform. Die Felder sind jeweils als Gitter ausgeführt und liegen flächig auf dem Statorblechpaket 22 auf, wobei zumindest ein Teil der parallel zu den Elektroblechen 28 verlaufenden Verzweigungen mit den Elektroblechen 28, wenigstens abschnittsweise, verschweißt sind, wobei pro Feld 46 in Umfangsrichtung und/oder in Axialrichtung eine Mehrzahl von Schweißverbindungen 44 mit den Elektroblechen 28 des Statorblechpakets 22 ausgebildet ist. Darüber hinaus sind zwischen den Feldern 46 Zwischendruckplatten 26 angeordnet. Die Felder sind mit den beidseitig an den axialen Enden des Statorblechpakets 22 angeordneten Druckplatten und den Zwischendruckplatten 26 über Schweißverbindungen 44 verbunden.

Die rechteckigen Ausnehmungen 42 in den gitterförmig ausgeführten Feldern sind so angeordnet, dass sie ein zumindest radiales Ausströmen eines Kühlfluids durch einen im Statorblechpaket 22 angeordneten Kühlkanal ermöglichen. Die Größe, radiale Ausdehung und Anordnung der Felder 46 ist, je nach Anforderung an die Steifigkeit des Statorblechpakets 22 und eine Überdeckung von Kühlkanälen, welche insbesondere radial durch das Statorblechpaket 22 verlaufen, variierbar. Die weitere Ausführung des Stators 14 in FIG 5 entspricht der Ausführung in FIG 4.

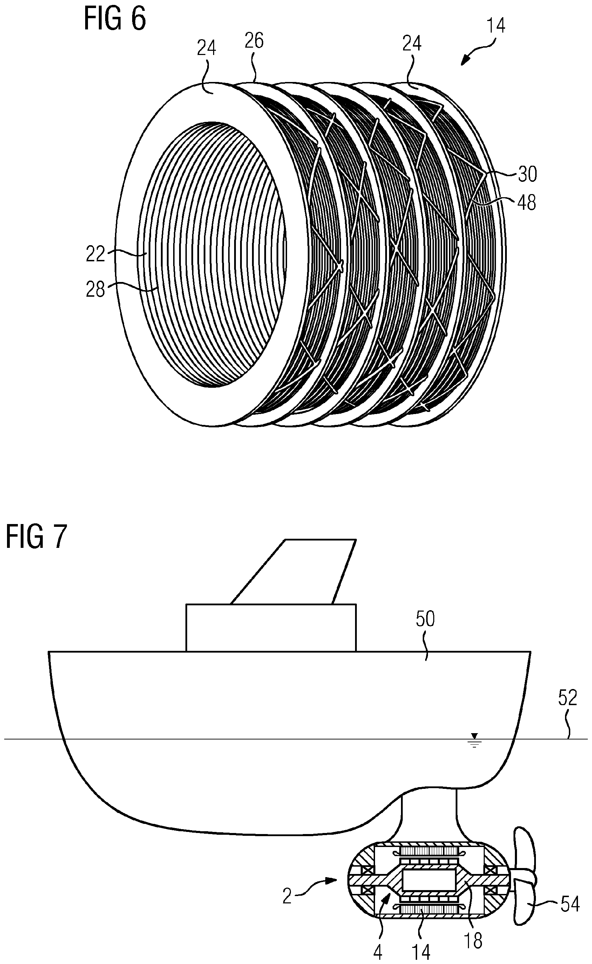

FIG 6 zeigt eine perspektivische Darstellung eines Stators 14 mit einer dritten Ausführungsform eines Versteifungselements 30. Wie in den Figuren 2 und 4 sind die Nuten 34 mit der Statorwicklung 32 aus Gründen der Übersichtlichkeit nicht dargestellt. Das Versteifungselement 30 umfasst diagonal verlaufende Vierkantstreben 48, welche helixförmig an den Elektroblechen 28 des Statorblechpakets 22 anliegen und zumindest mit einem Teil der Elektrobleche 28 verschweißt sind. Die diagonal verlaufenden Vierkantstreben 48 werden durch Zwischendruckplatten 26 unterbrochen. Alternativ weisen die Zwischendruckplatten 26 Öffnungen auf, durch die die Vierkantstreben 48 verlaufen, wobei die Vierkantstreben 48 im Bereich der Öffnungen mit den Zwischendruckplatten 26, beispielsweise durch eine Schweißverbindung, stoffschlüssig verbunden sind. Durch die sich kreuzenden diagonal verlaufende Vierkantstreben 48 ist ein, insbesondere rautenförmiges, Gitter ausgebildet, welches den Stator 14 versteift. Die Dimensionierung und Beabstandung der diagonal verlaufende Vierkantstreben 48 ist, je nach Anforderung an die Steifigkeit des Statorblechpakets 22 und die Überdeckung von Kühlkanälen, welche insbesondere radial durch das Statorblechpaket 22 verlaufen, variierbar.

Die weitere Ausführung des Stators 14 in FIG 6 entspricht der Ausführung in FIG 3.

FIG 7 zeigt ein Wasserfahrzeug 50 mit einem Gondelantrieb 2. Das Wasserfahrzeug 50 ist insbesondere als Schiff ausgeführt. Der Gondelantrieb 2 befindet sich unter einer Wasseroberfläche 52 und weist eine elektrische rotierende Maschine 4 und einen Propeller 54 auf, wobei der Propeller 54 über eine Welle 18 mit der elektrischen rotierenden Maschine 4 verbunden ist. Durch die Verwendung von aus Gründen der Übersichtlichkeit in FIG 7 nicht dargestellten Versteifungselementen 30 weist der Stator 14 der elektrischen rotierenden Maschine 4 eine geringe radiale Bauhöhe bei einer erhöhten Steifigkeit auf.

Zusammenfassend betrifft die Erfindung einen Stator 14 für eine elektrische rotierende Maschine 4, aufweisend ein Statorblechpaket 22 mit einer Vielzahl von geschichteten Elektroblechen 28. Um bei einer hohen Steifigkeit eine geringe radiale Bauhöhe zu erreichen, wird vorgeschlagen, dass das Statorblechpaket 22 zumindest abschnittsweise von einem metallischen Versteifungselement 30 umgeben ist, wobei das Versteifungselement 30 flächig auf dem Statorblechpaket 22 aufliegt und Ausnehmungen 42 aufweist, wobei das Versteifungselement 30 im Bereich zumindest einiger Ausnehmungen 42 mit zumindest einem Teil der Elektrobleche 28 des Statorblechpakets 22 verbunden ist.

## Patentansprüche

1. Stator (14) für eine elektrische rotierende Maschine (4), aufweisend ein Statorblechpaket (22) mit einer Vielzahl von geschichteten Elektroblechen (28),
wobei das Statorblechpaket (22) zumindest abschnittsweise von einem metallischen Versteifungselement (30) umgeben ist, wobei das Versteifungselement (30) flächig auf dem Statorblechpaket (22) aufliegt und Ausnehmungen (42) aufweist, wobei das Versteifungselement (30) im Bereich zumindest einiger Ausnehmungen (42) mit zumindest einem Teil der Elektrobleche (28) des Statorblechpakets (22) verbunden ist.

2. Stator (14) nach Anspruch 1,
wobei das Versteifungselement (30) mit zumindest einem Teil der Elektrobleche (28) des Statorblechpakets (22) stoffschlüssig verbunden ist.

3. Stator (14) nach Anspruch 2,
wobei die stoffschlüssige Verbindung durch Kleben, Löten und/oder Schweißen hergestellt ist.

4. Stator (14) nach einem der Ansprüche 2 oder 3,
wobei zumindest eine stoffschlüssige Verbindung in Umfangsrichtung verläuft.

5. Stator (14) nach einem der vorherigen Ansprüche,
wobei das Versteifungselement (30) als, insbesondere periodisches, Gitter ausgeführt ist, welches zumindest teilweise in Umfangsrichtung verlaufend angeordnete Verzweigungen aufweist.

6. Stator (14) nach Anspruch 5,
wobei die Verzweigungen des Gitters in Radialrichtung profiliert ausgeführt sind.

7. Stator (14) nach einem der Ansprüche 5 oder 6,
wobei sich kreuzende Verzweigungen im Wesentlichen orthogonal zueinander angeordnet sind.

8. Stator (14) nach einem der vorherigen Ansprüche,
wobei die Ausnehmungen (30) im Wesentlichen polygonal, insbesondere tetragonal, ausgeführt sind.

9. Stator (14) nach einem der vorherigen Ansprüche, aufweisend zumindest zwei Druckplatten (24, 26),
wobei das Versteifungselement (30) mit zumindest einer Druckplatte (24, 26) stoffschlüssig verbunden ist.

10. Stator (14) nach einem der vorherigen Ansprüche,
wobei das Versteifungselement (30) auf dem Statorblechpaket (22) verteilte Felder (46) ausbildet.

11. Stator (14) nach einem der vorherigen Ansprüche,
wobei innerhalb der Ausnehmungen (42), insbesondere radiale, Kühlkanäle angeordnet sind.

12. Elektrische rotierende Maschine (4) mit mindestens einem Stator (14) nach einem der Ansprüche 1 bis 11.

13. Gondelantrieb (2) mit mindestens einer elektrischen rotierenden Maschine (4) nach Anspruch 12.

14. Wasserfahrzeug (50), insbesondere Schiff, mit mindestens einem Gondelantrieb (2) nach Anspruch 13.

15. Verfahren zur Herstellung eines Stators (14) nach einem der Ansprüche 1 bis 11,
wobei ein Statorblechpaket (22) durch Schichten einer Vielzahl von Elektroblechen (28) gebildet wird,
wobei daraufhin ein metallisches Versteifungselement (30) zumindest abschnittsweise auf dem Statorblechpaket (22) aufliegend angeordnet und mit zumindest einem Teil der Elektrobleche (28) verbunden wird.
